# EUROPÄISCHE PATENTSCHRIFT

(11) **EP 1 304 254 B1**
(45) Veröffentlichungstag und Bekanntmachung des Hinweises auf die Patenterteilung: **22.12.2004**
(21) Anmeldenummer: 02018828.0
(22) Anmeldetag: 23.08.2002
(51) Int. Cl.: B60N 2/015, B60N 2/24, B60N 2/005

(54) **Vorrichtung zur Befestigung eines Fahrgastsitzes**
Device for fastening a passenger seat
Dispositif pour la fixation d'un siège de passager

(30) Priorität: 18.10.2001 DE 10150917
(43) Veröffentlichungstag der Anmeldung: 23.04.2003
(73) Patentinhaber: Vogelsitze GmbH, 76228 Karlsruhe (DE)
(72) Erfinder: Bilfinger, Jan, 76228 Karlsruhe (DE)
(74) Vertreter: Dimmerling, Heinz, Dipl.-Ing.

(56) Entgegenhaltungen:
- EP-A- 0 353 684
- DE-A- 19 547 095
- US-A- 4 167 285

## Beschreibung

Die Erfindung betrifft eine Vorrichtung nach dem Oberbegriff des Anspruchs 1, zur Befestigung eines Fahrgastsitzes an der Seitenwand eines Personenbeförderungsfahrzeuges, mit wenigstens einem sich länglich erstreckenden Längsprofil, auf welchem das Sitzteil des Fahrgastsitzes befestigbar ist, und welches an der Seitenwand befestigbar ist, wobei an der Seitenwand ein Halteelement angeordnet ist, welches einen sich von der Seitenwand weg erstreckenden ersten Bereich und einen sich in Richtung zum Fahrzeugboden hin erstreckenden zweiten Bereich hat.

Eine derartige Vorrichtung wie z.B. die EP 0 353 684 A, ist im Stand der Technik hinlänglich bekannt. Bei weiteren bekannten Vorrichtungen ist das Tragrohr beziehungsweise sind die Tragrohre auf einer Blechplatte angeordnet, mittels welcher das Tragrohr beziehungsweise die Tragrohre an der Seitenwand des Fahrzeuges befestigt werden. An der Seite, an der die Blechplatte mit der Seitenwand verbunden wird, ist die Blechplatte eben ausgebildet.

Die Blechplatte weist an ihrer der Seitenwand zugewandten Seite Löcher auf, durch welche sich Schrauben erstrecken, welche in unterhalb der Blechplatte verlaufende U-förmige Klauen einschraubbar sind. Mittels der Schrauben können die Klauen in Richtung zur Blechplatte angezogen werden.

An der Seitenwand des Fahrzeuges ist eine L-förmige Schiene angeordnet, Welche sich etwa waagerecht aus der Seitenwand erstreckt und an ihrem der Seitenwand abgewandten Ende zum Fahrzeugboden hin abgewinkelt ist.

Zur Befestigung des Fahrgastsitzes an der Seitenwand beziehungsweise zur Befestigung der Blechplatte an der Seitenwand wird die Blechplatte auf den sich waagerecht aus der Seitenwand erstreckenden Teil der Schiene aufgelegt. Hierdurch hintergreift der der Seitenwand zugewandte Schenkel der Klauen das zum Fahrzeugboden hin abgewinkelte Ende der Schiene. Durch Anziehen der Schrauben werden die Klauen fest gegen die Blechplatte gedrückt, wodurch die sich aus der Seitenwand erstreckende Schiene zwischen dem der Seitenwand zugewandten Schenkel der Klaue und der Blechplatte eingeklemmt wird.

Wenngleich eine derartige Befestigung ihren Zweck auch im wesentlichen erfüllt, so hat sie dennoch den Nachteil, daß sie recht aufwendig zu montieren ist. Darüber hinaus sind die Schrauben sehr gut einsehbar, was sich nachteilig auf das Aussehen der Sitzbefestigung auswirkt.

Aus der DE 689 06 753 T2 ist ein Sitzuntergestell für Fahrzeuge des öffentlichen Verkehrs bekannt, bei welchem die Verbindungskräfte, die eine vertikal auf das Ende des den Sitz abstützenden Schenkels einwirkende Kraft erzeugen, in eine vertikale Belastung umgesetzt werden. Das Sitzuntergestell weist im vertikalen Schnitt durch einen zum Boden des Fahrzeuges und gleichzeitig zu dessen Seitenwandung senkrechten Ebene ein Profil auf, das im wesentlichen die Form eines umgekehrten "L" hat. Der horizontale Abschnitt des Untergestells dient als Sitzfläche eines Sitzes. Der vertikale Schenkel stützt sich auf dem Fahrzeugboden ab und steht mit der Seitenwandung in Kontakt.

Der vertikale Schenkel ist dicker als der horizontale Schenkel. Auf seiner Außenseite weist er im unteren Bereich einen Vorsprung auf, welcher in eine in der Seitenwandung ausgebildete Ausnehmung in Eingriff gebracht werden kann.

Es ist Aufgabe der Erfindung, eine eingangs genannte Vorrichtung derart auszubilden, daß sie eine schnelle und sichere Befestigung des Fahrgastsitzes erlaubt, wobei die Befestigungselemente von oben nicht sichtbar sein sollen.

Die Lösung dieser Aufgabe ergibt sich aus den kennzeichnenden Merkmalen des Anspruchs 1. Vorteilhafte Weiterbildungen der Erfindung ergeben sich aus den Unteransprüchen.

Gemäß der Erfindung ist eine Vorrichtung zur Befestigung eines Fahrgastsitzes an der Seitenwand eines Personenbeförderungsfahrzeuges, mit wenigstens einem sich länglich erstreckenden Längsprofil, auf welchem das Sitzteil des Fahrgastsitzes befestigt ist, und welches an der Seitenwand befestigt ist, wobei an der Seitenwand ein Halteelement angeordnet ist, welches einen sich von der Seitenwand weg erstrekkenden ersten Bereich und einen sich in Richtung zum Fahrzeugboden hin erstrekkenden zweiten Bereich hat, dadurch gekennzeichnet, daß das Längsprofil an seinem der Seitenwand zugewandten Ende ein zum Fahrzeugboden hin offenes u-förmig ausgebildetes Befestigungselement aufweist, sowie das Halteelement an seinem sich zum Fahrzeugboden hin erstreckenden Bereich einen sich zur Seitenwand hin erstreckenden Teil hat, an dessen der Seitenwand zugewandtem Ende ein sich vom Fahrzeugboden weg erstreckender Teil angeordnet ist, wobei der sich vom Fahrzeugboden weg erstreckende Teil des Halteelementes und der tragrohrseitige Schenkel des Befestigungselements sich gegenseitig hintergreifen.

Dadurch daß das Längsprofil an seinem der Seitenwand zugewandten Ende ein zum Fahrzeugboden hin offenes u-förmig ausgebildetes Befestigungselement aufweist, sowie das Halteelement an seinem sich zum Fahrzeugboden hin erstreckenden Bereich einen sich zur Seitenwand hin erstreckenden Teil hat, an dessen der Seitenwand zugewandten Ende ein sich vom Fahrzeugboden weg erstreckender Teil angeordnet ist, lassen sich das Befestigungselement und das Halteelement unterhalb des sich von der Seitenwand weg erstreckenden ersten Bereichs des Halteelements miteinander in Eingriff bringen. Hierdurch ist die Verbindungsstelle des Befestigungselements mit dem Halteelement nicht sichtbar. Des weiteren wird dadurch, daß das Befestigungselement als ein zum Fahrzeugboden hin offenes u-förmiges Teil ausgebildet ist, erreicht, daß es in das Halteelement eingehängt werden kann. Hierdurch wird die Montage stark vereinfacht.

Als besonders vorteilhaft hat sich ein Befestigungselement erwiesen, welches als Klauenprofil ausgebildet ist, bei der ein Schenkel kürzer als der andere Schenkel ist. Hierdurch läßt sich auf einfache Weise eine sehr zuverlässige Klemmung des Befestigungselements an dem Halteelement erreichen.

Besonders vorteilhaft ist auch eine Ausführungsform der Erfindung, bei der eine Platte vorhanden ist, an welcher das wenigstens eine Längsprofil befestigt ist, und an welcher das Befestigungselement angeordnet ist. Durch die Platte kann die Wandanbindung der Längsprofile an die Seitenwand als separates Element gehandhabt werden. Insbesondere läßt sich die Wandanbindung als separates Teil herstellen. Dies vereinfacht die Herstellung erheblich.

Bei einer derartigen Vorrichtung ist es besonders vorteilhaft, wenn das Befestigungselement mittels Schrauben mit der Platte verbunden ist, wobei sich die Schrauben jeweils durch ein in der Platte ausgebildetes Langloch erstrecken. Durch das Langloch können die Schrauben und damit das Befestigungselement in Richtung zur Seitenwand oder von der Seitenwand weg bewegt werden. Hierdurch ist es in vorteilhafter Weise möglich, das Befestigungselement in das Halteelement einzuhängen und dann die Platte und somit die mit der Platte verbundenen Längsprofile beziehungsweise das über die Längsprofile mit der Platte verbundene Sitzteil in Richtung zur Seitenwand zu verschieben. Das heißt, die Längsprofile beziehungsweise das Sitzteil können bis dicht an das Halteelement geschoben werden, so daß zwischen Längsprofil beziehungsweise Sitzteil kein Spalt vorhanden ist, was sich sehr vorteilhaft auf das Aussehen des Sitzes auswirkt. Des weiteren lassen sich durch die Langlöcher Toleranzen ausgleichen.

Besonders günstig ist es, wenn die Schrauben Druckfedem aufweisen, mittels derer das Befestigungselement auf Abstand zur Platte gehalten wird. Hierdurch vereinfacht sich die Montage erheblich, da sich das Befestigungselement sehr leicht in das Halteelement einklinken läßt.

Besonders vorteilhaft ist auch eine Ausführungsform der Erfindung, bei der die Platte eine Ausnehmung aufweist. Hierdurch wird Gewicht eingespart, was im Fahrzeugbau sehr wünschenswert ist.

Bei einer weiteren besonderen Ausführungsform der Erfindung sind der sich von der Seitenwand weg erstreckende erste Bereich und der sich in Richtung zum Fahrzeugboden hin erstreckende zweite Bereich des Halteelements als Sichtblende ausgebildet. Dadurch wird die Verbindung des Befestigungselements mit dem Halteelement vollständig abgedeckt, was sich einerseits sehr vorteilhaft auf das Aussehen des Sitzes auswirkt, und sich andererseits sehr vorteilhaft im Hinblick auf eine Verletzungsgefahr beispielsweise durch Einklemmen der Finger an der Verbindung des Befestigungselements mit dem Halteelement auswirkt.

Sehr vorteilhaft ist es, wenn das Halteelement ein Aluminium-Formteil ist. Hierdurch läßt sich das Halteelement preiswert herstellen.

Weitere Einzelheiten der vorliegenden Erfindung ergeben sich aus der nachfolgenden Beschreibung eines besonderen Ausführungsbeispiels unter Bezugnahme auf die Zeichnung.

Es zeigt
- Figur 1: eine schematische Darstellung einer erfindungsgemäßen Vorrichtung teilweise im Schnitt quer zur Längsrichtung des Halteelements und der Seitenwand,
- Figur 2: eine aus Befestigungselement, Platte und Längsprofilen bestehende Anordnung in perspektivischer Darstellung und
- Figur 3: den Verlauf der Einhängbewegung des Befestigungselements in das Halteelement.

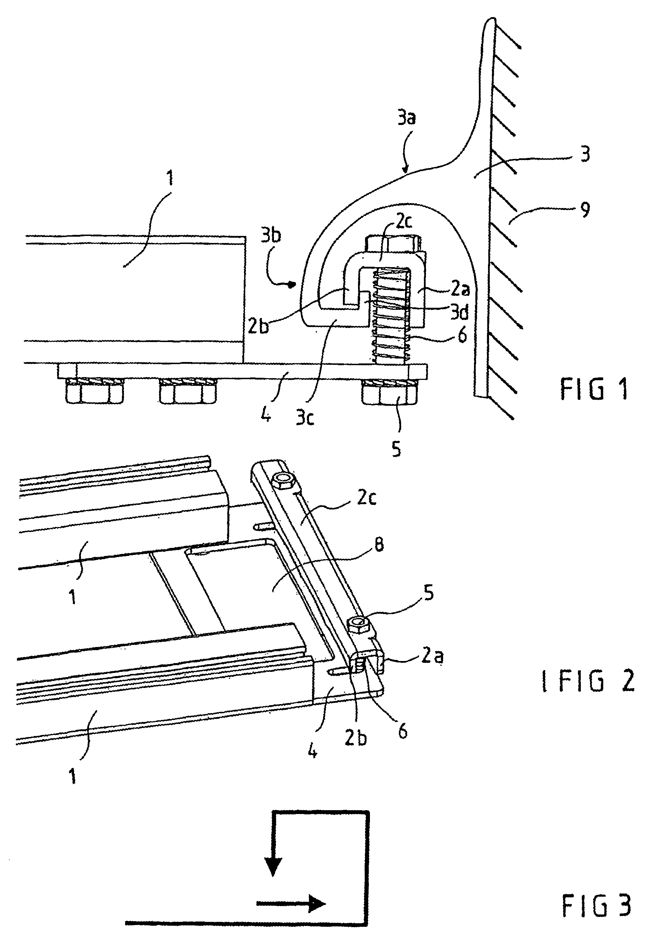

Wie den Figuren 1 und 2 entnommen werden kann, sind zwei Längsprofile 1, auf welchen das Sitzteil eines Fahrgastsitzes befestigbar ist, auf einer Platte 4 befestigt.

Die Platte 4 weist in ihrer Mitte eine rechteckförmige Ausnehmung 8 auf, welche einer Gewichtserspamis dient. An ihrer den Längsprofilen 1 abgewandten Seite weist die Platte 4 Langlöcher 7 auf, durch welche sich Schrauben 5 erstrecken. Die Schrauben 5 sind in den Steg 2c eines u-förmig ausgebildeten Befestigungselements 2a, 2b, 2c eingeschraubt. Die Öffnung des Befestigungselements 2a, 2b, 2c weist in Richtung zur Blechplatte 4 beziehungsweise zum Fahrzeugboden hin. Der den Längsprofilen 1 zugewandte Schenkel 2b des Befestigungselements 2a, 2b, 2c ist kürzer als der der Seitenwand 9 zugewandte Schenkel 2a. Auf der Schraube 5 ist eine Druckfeder 6 angeordnet, durch welche das Befestigungselement 2a, 2b, 2c in Abstand zur Blechplatte 4 gehalten wird.

An der Seitenwand 9 eines Personenbeförderungsfahrzeuges ist ein Halteelement 3 angeordnet. Das Halteelement 3 hat einen sich von der Seitenwand 9 weg erstrekkenden ersten Bereich 3a und einen sich in Richtung zum Fahrzeugboden hin erstreckenden zweiten Bereich 3b. An den Seitenbereich 3b schließt sich ein sich zur Seitenwand 9 hin erstreckender Teil 3c an. An dessen der Seitenwand 9 zugewandten Ende ist ein sich vom Fahrzeugboden weg erstreckender Teil 3d angeordnet. Der sich vom Fahrzeugboden weg erstreckende Teil 3d des Halteelements 3 und der tragrohrseitige Schenkel 2b des Befestigungselements 2a, 2b, 2c sind so ausgebildet, daß sie sich im montieren Zustand gegenseitig hintergreifen.

In der in Figur 1 dargestellten Position ist die Hintergreifung noch nicht abgeschlossen. Zur vollständigen Hintergreifung muß die Bodenplatte 4 beziehungsweise die Längsprofile 1 noch in Richtung von der Seitenwand 9 wegbewegt und abgesenkt werden. Die volständige Einhängbewegung des Befestigungselements 2a, 2b, 2c in das Halteelement 3 ist in Figur 3 dargestellt.

Wie Figur 3 entnommen werden kann, wird die aus der Platte 4, den Längsprofilen 1 und dem Befestigungselement 2a, 2b, 2c bestehende Anordnung zunächst in einem Abstand von dem sich zur Seitenwand 9 hin erstreckenden Teil 3c des Halteelements 3 in Richtung Seitenwand 9 bewegt. Befindet sich das u-förmige Befestigungselement 2a, 2b, 2c nicht mehr unterhalb des sich zur Seitenwand hin erstreckenden Teils 3c, wird die Anordnung in Richtung vom Fahrzeugboden weg bewegt, bis die Platte 4 an den sich zur Seitenwand 9 hin erstreckenden Teil 3c anstößt. Danach wird die Anordnung in Richtung von der Seitenwand 9 weg bewegt, bis die Schraube 5 an den sich vom Fahrzeugboden weg erstreckenden Teil 3d des Halteelements 3 anstößt. Anschließend wird die Anordnung in Richtung Fahrzeugboden abgesenkt, bis der sich vom Fahrzeugboden weg erstreckende Teil 3d des Halteelements 3 an den Steg 2c des Befestigungselements 2a, 2b, 2c anstößt beziehungsweise der Längsprofilseitige Schenkel 2b des Befestigungselements 2a, 2b, 2c auf dem sich zur Seitenwand 9 hin erstreckenden Teil 3c des Halteelements 3 aufliegt. Hierdurch hintergreifen sich der vom Fahrzeugboden weg erstreckende Teil 3d des Halteelements 3 und der tragrohrseitige Schenkel 2b des Befestigungselements 2a, 2b, 2c gegenseitig.

Nachdem sich die beiden Elemente gegenseitig hintergreifen, wird die Platte 4 mit den Längsprofilen 1 wieder in Richtung Seitenwand 9 geschoben. Hierdurch gleiten die Schrauben 5 in den Langlöchem 7. Die Platte 4 wird soweit in Richtung Seitenwand 9 geschoben, bis die Längsprofile 1 an das Halteelement 3 anstoßen. Danach werden die Schrauben 5 fest angezogen, so daß sich die Platte 4, das Befestigungselement 2a, 2b, 2c und das Halteelement 3 miteinander verklemmen.

## Patentansprüche

1. Vorrichtung zur Befestigung eines Fahrgastsitzes an der Seitenwand (9) eines Personenbeförderungsfahrzeuges, mit wenigstens einem sich länglich erstreckenden Längsprofil (1), auf welchem das Sitzteil des Fahrgastsitzes befestigbar ist, und welches an der Seitenwand (9) befestigbar ist, wobei an der Seitenwand (9) ein Halteelement (3) angeordnet ist, welches einen sich von der Seitenwand (9) weg erstrekkenden ersten Bereich (3a) und einen sich in Richtung zum Fahrzeugboden hin erstreckenden zweiten Bereich (3b) hat,
**dadurch gekennzeichnet,**
**daß** das Längsprofil (1) an seinem der Seitenwand (9) zugewandten Ende ein zum Fahrzeugboden hin offenes u-förmig ausgebildetes Befestigungselement (2a, 2b, 2c) aufweist, sowie das Halteelement (3) an seinem sich zum Fahrzeugboden hin erstreckenden Bereich (3b) einen sich zur Seitenwand (9) hin erstreckenden Teil (3c) hat, an dessen der Seitenwand (9) zugewandten Ende ein sich vom Fahrzeugboden weg erstreckender Teil (3d) angeordnet ist, wobei der sich vom Fahrzeugboden weg erstreckende Teil (3d) des Halteelementes (3) und der Längsprofilseitige Schenkel (2b) des Befestigungselements (2a, 2b, 2c) sich gegenseitig hintergreifen.

2. Vorrichtung nach Anspruch 1,
**dadurch gekennzeichnet,**
**daß** das Befestigungselement (2a, 2b, 2c) als Klauenprofil ausgebildet ist, bei der ein Schenkel (2b) kürzer als der andere Schenkel (2a) ist.

3. Vorrichtung nach Anspruch 1 oder 2,
**dadurch gekennzeichnet,**
**daß** eine Platte (4) vorhanden ist, an welcher das wenigstens eine Längsprofil (1) befestigt ist, und an welcher das Befestigungselement (2a, 2b, 2c) angeordnet ist.

4. Vorrichtung nach Anspruch 3,
**dadurch gekennzeichnet,**
**daß** das Befestigungselement (2a, 2b, 2c) mittels Schrauben (5) mit der Platte (4) verbunden ist, wobei sich die Schrauben (5) jeweils durch ein in der Platte (4) ausgebildetes Langloch (7) erstrecken.

5. Vorrichtung nach Anspruch 4,
**dadurch gekennzeichnet,**
**daß** die Schrauben (5) Druckfedem (6) aufweisen, mittels der das Befestigungselement (2a, 2b, 2c) auf Abstand zur Platte (4) gehalten wird.

6. Vorrichtung nach einem der Ansprüche 3 bis 5,
**dadurch gekennzeichnet,**
**daß** die Platte (4) eine Ausnehmung (8) aufweist.

7. Vorrichtung nach einem der Ansprüche 1 bis 6,
**dadurch gekennzeichnet,**
**daß** sich der von der Seitenwand weg erstreckende erste Bereich (3a) und der sich in Richtung zum Fahrzeugboden hin erstreckende zweite Bereich (3b) des Halteelements (3) als Sichtblende ausgebildet sind.

8. Vorrichtung nach Anspruch 7,
**dadurch gekennzeichnet,**
**daß** das Halteelement (3) ein Aluminium-Formteil ist.

## Claims

1. Device for fastening a passenger seat to the side wall (9) of a passenger transport vehicle having at least one elongated profile (1) extending longitudinally, to which the seat member of the passenger seat may be fastened and which may be attached to the side wall (9), whereby a holding element (3) is arranged on the side wall (9), which has a first region (3a) extending away from the side wall (9) and a second region (3b) extending in the direction towards the vehicle floor, **characterised in that** the elongated profile (1) has a U-shaped fastening element (2a, 2b, 2c) open towards the vehicle floor on its end facing towards the side wall (9), and on its region (3b) extending towards the vehicle floor, the holding element (3) has a member (3c) extending towards the side wall (9), on whose end facing towards the side wall (9) is arranged a member (3d) extending away from the vehicle floor, whereby the member (3d) of the holding element (3) extending away from the vehicle floor and the limb (2b) on the elongated profile side of the fastening element (2a, 2b, 2c) engage behind one another.

2. Device according to Claim 1, **characterised in that** the fastening element (2a, 2b, 2c) is designed as a claw profile in which one limb (2b) is shorter than the other limb (2a).

3. Device according to Claim 1 or 2, **characterised in that** a plate (4) is provided to which at least one elongated profile (1) is attached and on which the fastening element (2a, 2b, 2c) is arranged.

4. Device according to Claim 3, **characterised in that** the fastening element (2a, 2b, 2c) is connected by means of screws (5) to the plate (4), whereby the screws (5) each extend through a slot (7) formed in the plate (4).

5. Device according to Claim 4, **characterised in that** the screws (5) have compression springs (6) by means of which the fastening element (2a, 2b, 2c) is held at a distance from the plate (4).

6. Device according to one of the claims 3 to 5, **characterised in that** the plate (4) has a cut-out (8).

7. Device according to one of the claims 1 to 6, **characterised in that** the first region (3a) of the holding element (3) extending away from the side wall and the second region (3b) of the holding element (3) extending in the direction towards the vehicle floor are designed as a visual screen.

8. Device according to Claim 7, **characterised in that** the holding element (3) is a moulded aluminium member.

## Revendications

1. Dispositif pour la fixation d'un siège de passager sur la paroi latérale (9) d'un véhicule de transport de personnes, comportant au moins un profilé longitudinal (1) qui s'étend en longueur, sur lequel la partie d'assise dudit siège de passager peut être fixée, et qui peut être fixé à la paroi latérale (9), sachant qu'un élément de retenue (3), disposé sur la paroi latérale (9), comprend une première région (3a) partant de ladite paroi latérale (9) et une seconde région (3b) s'étendant en direction du plancher du véhicule,
**caractérisé par le fait**
**que** le profilé longitudinal (1) présente, à son extrémité tournée vers la paroi latérale (9), un élément de fixation (2a, 2b, 2c) configuré en U ouvert en direction du plancher du véhicule, et l'élément de retenue (3) comporte, dans sa région (3b) s'étendant en direction du plancher du véhicule, une partie (3c) qui s'étend vers la paroi latérale (9) et dont l'extrémité, tournée vers ladite paroi latérale (9), offre une partie (3d) partant du plancher du véhicule, ladite partie (3d) de l'élément de retenue (3), partant du plancher du véhicule, et la branche (2b) de l'élément de fixation (2a, 2b, 2c) située du côté du profilé longitudinal, venant en prise mutuelle par-derrière.

2. Dispositif selon la revendication 1,
**caractérisé par le fait**
**que** l'élément de fixation (2a, 2b, 2c) est réalisé sous la forme d'un profil à griffe dont une branche (2b) est plus courte que l'autre branche (2a).

3. Dispositif selon la revendication 1 ou 2,
**caractérisé par**
la présence d'un panneau (4) auquel est fixé le profilé longitudinal (1) prévu au minimum, et sur lequel l'élément de fixation (2a, 2b, 2c) est disposé.

4. Dispositif selon la revendication 3,
**caractérisé par le fait**
**que** l'élément de fixation (2a, 2b, 2c) est relié au panneau (4) au moyen de vis (5), lesdites vis (5) traversant respectivement un trou oblong (7) pratiqué dans ledit panneau (4).

5. Dispositif selon la revendication 4,
**caractérisé par le fait**
**que** les vis (5) présentent des ressorts de pression (6) au moyen desquels l'élément de fixation (2a, 2b, 2c) est maintenu à distance du panneau (4).

6. Dispositif selon l'une des revendications 3 à 5,
**caractérisé par le fait**
**que** le panneau (4) comporte un évidement (8).

7. Dispositif selon l'une des revendications 1 à 6,
**caractérisé par le fait**
**que** la première région (3a) de l'élément de retenue (3), partant de la paroi latérale, et la seconde région (3b) dudit élément qui s'étend en direction du plancher du véhicule, sont réalisées sous la forme d'un cache d'occultation.

8. Dispositif selon la revendication 7,
**caractérisé par le fait**
**que** l'élément de retenue (3) se présente comme une pièce venue de moulage en aluminium.
